(19) Europäisches Patentamt

European Patent Office

Office européen des brevets

(11) **EP 0 682 093 B1**

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int Cl.⁶: **C09D 7/00**, C08K 3/26

(21) Anmeldenummer: **95105396.6**

(22) Anmeldetag: **10.04.1995**

(54) **Verwendung von carbonathaltigen mineralischen Füllstoffen als Mattierungsmittel**

Use of carbonate-containing, mineral fillers as gloss-reducing agent

Utilisation des charges minérales contentant des carbonates comme agent de metité

(84) Benannte Vertragsstaaten:
**AT DE FR GB IT**

(30) Priorität: **13.05.1994 DE 4416895**

(43) Veröffentlichungstag der Anmeldung:
**15.11.1995 Patentblatt 1995/46**

(73) Patentinhaber: **Plüss-Staufer AG**
**4665 Oftringen (CH)**

(72) Erfinder:
• **Pfaller, Harald, Dr.**
**CH-4612 Wangen bei Olten (CH)**
• **Strauch, Dieter**
**CH-4800 Zofingen / AG (CH)**

(74) Vertreter: **Reinhard - Skuhra - Weise & Partner**
**Postfach 44 01 51**
**80750 München (DE)**

(56) Entgegenhaltungen:
EP-A- 0 012 578        EP-A- 0 217 626
EP-A- 0 515 757        FR-A- 2 187 866
US-A- 4 170 658        US-A- 4 835 195

## Beschreibung

Die vorliegende Erfindung betrifft die Verwendung von carbonathaltigen mineralischen Füllstoffen, insbesondere natürlichen und/oder gefällten Calciumcarbonaten, als Mattierungsmittel, insbesondere für wäßrige Anstrichsysteme oder für Kunststoffdispersionen.

Dispersionsfarben sind Anstrichstoffe, die zum Schutz und zur optischen Korrektur von Bauwerken eingesetzt werden. Innendispersionsfarben für Anstriche im witterungsgeschützten Inneren von Bauwerken stellen darunter die wichtigste und größte Gruppe dar.

Oft wird ein matter bis höchstens seidenglänzender Eindruck von beschichteten Wänden geschätzt. Die Aufgabe, diesen Eindruck zu vermitteln, fällt den Anstrichstoffen zu. Damit möglichst glanzarme Anstriche erzielt werden, muß man den Farben Mattierungsmittel zusetzen, die die gerichtete Reflexion von Licht weitestgehend unterbinden.

Mattierungsmittel zählen zu den Füllstoffen und zeichnen sich durch spezielle Korneigenschaften aus, die dazu beitragen, daß der Glanz einer Anstrichoberfläche reduziert wird. Die Glanzreduktion erfolgt durch die Schaffung gezielter Feinstrauhigkeit (= Mikrorauhigkeit) an der Anstrichoberfläche, wodurch die Lichtstreuung erhöht und die gerichtete Reflexion vermindert wird.

Mikrorauhigkeit kann unterschiedliche Ursachen haben: Bei Farben mit einer geschlossenen Bindemittelhaut an der Oberfläche wird sie dadurch hervorgerufen, daß man gröbere Körner als die der übrigen Bestandteile in entsprechender Menge einlagert, die dann eine homogene "Hügellandschaft" hervorrufen. Dabei ist die sich ergebende Gesamtkorngrößenverteilung aller Feststoffkomponenten zu beachten. Setzt man zu wenig Grobanteil zu, tritt der "Inseleffekt" auf, der dadurch gekennzeichnet ist, daß einzelne Körner wie Inseln aus einem homogenen, glatten Film hervorragen. Mit freiem Auge kann man diese Körner als glanzarme Körper im glänzenden Gesamtfilm erkennen.

Überkritische Farben, deren Bindemittelanteil nicht ausreicht, um alle Feststoffkomponenten vollständig zu umhüllen und zusätzlich die Zwickel zwischen den einzelnen Körnern auszufüllen, bieten eine andere Möglichkeit der Glanzreduzierung. Aufgrund des Bindemittelmangels enthält der trockene Anstrichfilm Luftporen. Solche, die Öffnungen an der Oberfläche zeigen (offene Poren), verursachen Oberflächenstörungen und somit Rauhigkeit. Daher liegt das Glanzniveau überkritischer Farben generell niedriger als bei unterkritischen. Setzt man nun einen sehr porösen Füllstoff (hohe innere Oberfläche) zu, so saugt dieser Bindemittel in seine Poren auf, verstärkt dadurch die Luftporenbildung im Anstrichfilm und senkt somit den Glanzgrad. Wenn dieser poröse Füllstoff (z.B. Diatomeenerde) gröber ist als die übrigen Komponenten, tritt zusätzlich der bei den unterkritischen Farben beschriebene Mattierungseffekt durch Körnungsveränderung ($\rightarrow$ "Hügellandschaftsbildung") ein.

In der Literatur findet man Angaben zur Mattierung von hochglänzenden Anstrichstoffen auf mittleres Glanzgradniveau (Huemmer T.F., Wasowski L.A., Plooy R.J. "Pigmentation of radiation curable systems", Journal of Paint Technology Vol. 44, No. 572, September 1972, Seiten 61 - 74).

Über die zusätzliche Mattierung im Halbmatt- bis Mattbereich, also von Farben mit bereits sehr niedrigem Ausgangs-Glanzniveau, liegen keine Literaturstellen vor. Mattierungsmittel werden nicht nur im Bereich der Dispersionsfarben, sondern bei allen Farben und Lacken eingesetzt, deren Glanzgrad verringert werden soll. So etwa auch bei UV-Strahlen-härtenden Lacken, in Polyurethan-Lacken oder auch bei Kunststoffüberzügen.

Das gängigste Mattierungsmittel für all diese Anwendungen, besonders aber auch für Dispersionsfarben, besteht aus mehr oder weniger reinem Siliziumoxid ($SiO_2$). Es wird aus natürlichen Lagerstätten oder synthetisch gewonnen. Als natürliches Siliziumoxid für Mattierungszwecke wird dessen poröse Form verwendet, die als Diatomeenerde, Diatomit, Kieselerde oder Kieselgur bezeichnet wird. Dabei handelt es sich um weißes, gelbliches oder graues Lockergestein, das sehr porös, leicht und feinkörnig ist. Mineralogisch ist dieses Gestein aus Opal als Hauptmineral aufgebaut, daneben enthält es je nach Reinheit entweder keine weiteren Bestandteile oder Tonminerale und/oder andere Silikate. Diese Diatomeenerde wird entweder direkt oder kalziniert als Mattierungsmittel eingesetzt. Die charakteristischen Merkmale sind hohe Porosität und spezifische Oberfläche sowie geringe Schüttdichte.

Neben Siliziumoxidprodukten werden als Mattierungsmittel auch noch Polymerhohlkugeln mit strukturierter Oberfläche, Blattsilikate wie Glimmer und Talk sowie Cellulosefasern verwendet. Während die Polymerhohlkugeln als Mattierungsmittel für Dispersionsfarben keine Bedeutung haben und Blattsilikate lediglich als Teilkomponenten verwendet werden, die alleine keine starke Mattierungswirkung erzielen, erreicht man mit Cellulosefasern eine effektive Glanzgradreduzierung. Neben Siliziumoxidprodukten stellen sie die wichtigste Mattierungsmittel-Gruppe für Dispersionsfarben dar. Zur Herstellung der Cellulosefasern wird Holz nach einer Zerspanung durch chemischen Aufschluß von Lignin und Hemicellulose befreit und anschließend mittels Chlor gebleicht. Die Späne werden hierauf zerfasert, fraktioniert und getrocknet.

Sowohl Siliziumoxidprodukte als auch Cellulosemattierungsmittel sind ökologisch sehr bedenklich.

Siliziumoxidprodukte können, unabhängig von ihrer Kristallstruktur, für den Menschen unmittelbar durch das Silikoserisiko sehr gefährlich werden. Siliziumoxidstaub, dessen Korngröße unter 10 um liegt, ist lungengängig und verursacht dort starke Wucherungen. Es ist bekannt, daß eine akute Silikose, die schon nach kurzer Einwirkung hoch siliziumoxidhaltigen Staubes (> 20 % $SiO_2$) eintreten kann, in der Regel schnell zu Lungenveränderungen und meist zum baldigen Tod führt. Bei längerwährender Einwirkung geringer Dosen tritt oft eine jahrzehntelange Latenz auf - auch nach Wegfall der Staubexposition -, die mit Beschwerden wie leichter Ermüdbarkeit, Appetitlosigkeit, Gewichtsverlust, Husten und zunehmender Atemnot einhergeht.

Personen, die mit Siliziumoxidprodukten hantieren müssen (etwa bei deren Herstellung oder Verarbeitung), sind einem hohen Risiko ausgesetzt. Das Risiko erstreckt sich besonders auch auf Menschen, die siliziumoxidhaltige Materialien mechanisch beanspruchen, wie etwa beim Entfernen alter Dispersionsanstriche durch Schleifen. In Deutschland gilt Silikose übrigens als melde- und entschädigungspflichtige Berufskrankheit.

Cellulosefasern, die als Mattierungsmittel eingesetzt werden, müssen hohe Weißgradwerte aufweisen, um gegenüber Siliziumoxidprodukten, mit 90 - 93 % Helligkeit, nicht zu sehr abzufallen.

Cellulose mit so hoher Helligkeit kann nur durch eine intensive und chemisch aggressive Bleichung erzeugt werden. Das einzige Element, das eine derart starke Bleichwirkung hervorruft, ist Chlor. Daher wird Cellulose mit gasförmigem oder gelöstem Chlor gebleicht - ein Verfahren, welches in der Papierindustrie bereits vor einigen Jahren stark unter Beschuß geraten ist. Es bilden sich bei der Bleichung nämlich aromatische Halogenide (AOX), die als krebserregend eingestuft werden. Während es für Cellulose, die in der Papierindustrie eingesetzt wird, bereits chlorfreie Bleichverfahren gibt, kann bei MattierungsmittelCellulose auf die Chlorbleichung aufgrund deutlich höherer Weißgradanforderungen nach dem derzeitigen Stand der Technik nicht verzichtet werden. Zwar werden alternative Bleichmethoden (z.B. Ozonbleichung) erprobt, jedoch liefern diese eine Cellulose mit deutlich geringerer Weiße, deren Einsatz die Helligkeit des Farbanstriches negativ beeinflussen würde.

Nach der Deutschen Norm DIN 53 778 (Deutsche Normen: "Kunststoffdispersionsfarbe für Innen", DIN 53 778, Teil 1 - 4 (August 1983)) werden an Kunststoffdispersionsfarben für Innen folgende Mindestanforderungen gestellt:

Die Verarbeitbarkeit mit den handelsüblichen Geräten im Streich-, Roll- oder Spritzverfahren muß gewährleistet sein. Zur Erreichung dieser Anforderung sind eine geeignete Farbviskosität und gemäß Praxisanforderung beim Airless-Spritzen eine Begrenzung der Feststoff-Maximalkorngröße auf 60 um erforderlich.

Dispersionsfarben müssen eine entmischungsfreie Verdünnbarkeit mit Wasser und Verträglichkeit mit Abtönfarben zeigen.

Bei einer Mindest-Verarbeitungstemperatur von + 5 °C müssen Dispersionsfarben noch einwandfrei applizierbar und verfilmungsfähig sein, soweit vom Hersteller keine andere Mindest-Verarbeitungstemperatur angegeben wird.

Carbonathaltige mineralische Füllstoffe, insbesondere natürliche und/oder gefällte Calciumcarbonate, sind bereits seit langer Zeit bekannt. Nur beispielsweise sei verwiesen auf die DE 41 28 570 Al, die carbonathaltige mineralische Füllstoffe, Pigmente oder ähnliche Materialien offenbart, die u.a. durch einen mittleren statistischen Teilchendurchmesser von 0,4 bis 1,5 μm gekennzeichnet sind.

Diese Materialien sind als Mattierungsmittel für wäßrige Anstrichsysteme schon deshalb nicht geeignet, weil sie viel zu fein sind und allein deshalb schon keinerlei Mattierungswirkung zeigen können.

Aus der US-A-4,170,658, Spalte 8, Tabelle 4, ist bereits ein Calciumcarbonat bekannt, das folgende Kornverteilung aufweist:

| Korngrößenverteilung SEDIGRAPH 5100 | |
|---|---|
| < 61 μm, % | 100 |
| < 56 μm, % | 100 |
| < 40 μm, % | 100 |
| < 20 μm, % | 96 - 100 |
| < 10 μm, % | 45 - 52 |
| < 5 μm, % | 25 - 30 |
| < 1 μm, % | 8 - 10 |
| mittl. Korngröße, $d_{50}$ μm | 9,8 - 12,0 |

Dieses Calciumcarbonat wird als Füllstoff für Kunststoffe verwendet. Daß dieses Calciumcarbonat auch als Mattierungsmittel verwendet werden könnte, wird durch diese Druckschrift weder vorbeschrieben noch in irgendeiner Weise nahegelegt.

Nach alledem stellt sich die grundsätzliche Frage: Ein Mattierungsmittel ist selbstverständlich um so wirksamer, je gröber seine Kornverteilung ist. Andererseits muß aber ein Handelsprodukt gut verarbeitbar sein; nur beispielsweise muß deshalb eine Begrenzung der Feststoff-Maximalkorngröße auf 60 μm eingehalten werden. Unabhängig davon sollen die Nachteile der vorstehend referierten Mattierungsmittel nach dem Stande der Technik vermieden werden.

Die Aufgabe der Erfindung besteht deshalb darin, geeignete carbonathaltige mineralische Füllstoffe, insbesondere natürliche und/oder gefällte Calciumcarbonate als Mattierungsmittel, insbesondere für wäßrige Anstrichsysteme oder für Kunststoffdispersionen, zu verwenden, wobei diese Mattierungsmittel die Nachteile von bekannten Füllstoffen zu diesem Zweck nicht aufweisen. Diese Aufgabe wird erfindungsgemäß gelöst durch die Verwendung von carbonathaltigen mineralischen Füllstoffen, insbesondere natürlichen und/oder gefällten Calciumcarbonaten mit folgender Korngrößenverteilung:

| | |
|---|---|
| < 61 μm | 100 % |
| < 56 μm | 95 - 100 % |
| < 40 μm | 90 - 100 % |
| < 20 μm | 48 - 95 % |
| < 10 μm | 15 - 52 % |
| < 5 μm | 9 - 28 % |
| < 1 μm | 0 - 10 % |
| $d_{50}$ | 9,6 - 20,5 μm, |

wobei zur Ermittlung der Korngrößenverteilung der Sedigraph 5100 verwendet wird, als Mattierungsmittel, insbesondere für wäßrige Anstrichsysteme und/oder für Kunststoffdispersionen.

Bevorzugt haben die erfindungsgemäßen Füllstoffe folgende Korngrößenverteilung:

| | |
|---|---|
| < 56 μm | 100 % |
| < 40 μm | 90 - 100 % |
| < 20 μm | 55 - 84 % |
| < 10 μm | 20 - 44 % |
| < 5 μm | 11 - 24 % |
| < 1 μm | 0 - 6 % |
| $d_{50}$ | 11,7 - 17,8 μm |

Besonders bevorzugt ist ein Füllstoff mit folgender Komgrößenverteilung:

| | |
|---|---|
| < 56 μm | 100 % |
| < 40 μm | 95 - 99 % |
| < 20 μm | 63 - 74 % |
| < 10 μm | 26 - 35 % |
| < 5 μm | 15 - 20 % |
| < 1 μm | 3 - 6 % |
| $d_{50}$ | 15,3 - 15,5 μm |

Erfindungsgemäß ist die optimale Korngrößenverteilung wie folgt:

| | |
|---|---|
| < 56 μm | 100 % |
| < 40 μm | 99 % |
| < 20 μm | 74 % |
| < 10 μm | 26 % |
| < 5 μm | 15 % |
| < 1 μm | 6 % |
| $d_{50}$ | 15,5 μm |

Grundsätzlich stehen für die erfindungsgemäßen CalciumcarbonatMattierungsmittel drei verschiedene Rohstoffarten zur Verfügung: Kalkstein, Kreide und Marmor. Erfindungsgemäß bevorzugt sind die natürlichen gegenüber den präzipitierten Mattierungsmittel. Erfindungsgemäß können beliebige carbonathaltige Füllstoffe Verwendung finden. Nur beispielsweise sei Dolomit genannt.

Selbstverständlich müssen sich neue Produkte an den Eigenschaften bereits bestehender und eingeführter Qualitäten orientieren. Dies gilt insbesondere bei Bestandteilen weißer Innendispersionsfarbe insbesondere im Hinblick auf ihre Helligkeit. Hochwertige handelsübliche Mattierungsmittel weisen Helligkeitswerte von > 90 % auf, ein unterer Grenzwert, den auch carbonathaltige Produkte erreichen sollten. Aufgrund dieser Helligkeitsanforderungen kommt erfindungsgemäß insbesondere Marmor in Frage. Mit Kreide und Kalkstein in der angepeilten Feinheit läßt sich der Grenzwert von 90 % schwerer erreichen. Wenn auch Marmor bevorzugt ist, können erfindungsgemäß ebenfalls Kreide und Kalkstein verwendet werden.

Alle erfindungsgemäßen Calciumcarbonate können in an sich bekannter Weise durch Zerkleinerung und Klassierung nach Korngrößen hergestellt werden.

Weitere Aufgabenstellungen, Merkmale und Vorteile der Erfindung ergeben sich aus der folgenden Beschreibung anhand von Ausführungsbeispielen.

Zunächst werden die im Zusammenhang mit der Erfindung stehenden Eigenschaften von Produkten näher beschrieben und, soweit erforderlich, die zugehörigen Meßverfahren angegeben:

1. Korngrößenverteilung:

Alle in der vorliegenden Patentanmeldung genannten Feinheitsmerkmale der erfindungsgemäß hergestellten Produkte wurden durch Sedimentationsanalyse im Schwerefeld mit dem SEDIGRAPH 5100 der Firma Micromeritics, U.S.A. bestimmt. Dieses Gerät ist dem Durchschnittsfachmann bekannt und wird weltweit zur Bestimmung der Feinheit von Füllstoffen und Pigmenten verwendet. Die Messung erfolgte in einer 0,1 Gew.%-igen, wäßrigen $Na_4P_2O_7$-Lösung. Die Dispergierung der Proben wurde mittels Ultraschall vorgenommen.

Die gemessene Teilchenverteilung wird in einer X-Y-Abbildung als Durchgangs-Summenkurve dargestellt (s. z.B. Belger, P., Schweizerische Vereinigung der Lack- und Farben-Chemiker, XVII. FATIPEC-Kongreß, Lugano, 23. bis 28. September 1984), wobei auf der X-Achse der Äquivalentdurchmesser gemäß DIN 66 160, S. 3 und auf der Y-Achse der Anteil an Teilchen in Gew.% aufgetragen wird.

Die vorstehend definierten Feinheitsmerkmale wurden an den mit dem vorstehend beschriebenen Verfahren erhaltenen Kurven abgelesen bzw. errechnet.

2. Weißgrad, Helligkeit und Gelbwert:

Als "Weißgrad" oder "Weiße" bezeichnet man die Farbe eines nur schwach bis nicht bunten Körpers.

Alle erfindungsgemäßen Messungen des Weißgrades - ausgewiesen als Reflexionsfaktoren Rx, Ry und Rz - wurden mit einem Elrepho 2000 Zweistrahl-Spektralphotometer der Firma Datacolor, Schweiz, durchgeführt, welches dem Durchschnittsfachmann bekannt ist.

Unter Helligkeit wird nach DIN 5033, Teil 1 (DIN 5033, Teil 1 (März 1979): Farbmessung, Grundbegriffe der Farbmetrik) die Stärke einer Lichtempfindung verstanden. In DIN 53778, Teil 3 (DIN 53778, Teil 3: Kunststoffdispersionsfarben, Bestimmung des Kontrastverhältnisses und der Helligkeit von Anstrichen) dient als Helligkeitsmaß der Normfarbwert Y, welcher dem Reflexionsfaktor Ry entspricht.

Der Gelbwert G dient gemäß DIN 6167 (DIN 6167 (Januar 1980): Beschreibung der Vergilbung von nahezu weißen oder nahezu farblosen Materialien) zur Charakterisierung der Gelbstichigkeit eines Produktes mit hoher Weiße. Er läßt sich aus den Normfarbwerten errechnen, so wie in DIN 6167 beschrieben, oder direkt aus den Reflexionsfaktoren Rx, Ry und Rz nach der Gleichung Rx - Rz

$$G = \frac{Rx - Rz}{Ry} \cdot 100$$

3. Trockenfilmdicke:

Die Trockenfilmdicke ist die Schichtdicke des trockenen Anstriches, die mit einem digitalen Tastfühler-Schichtdickenmeßgerät ermittelt wurde.

4. Kontrastverhältnis:

Als Kontrastverhältnis bezeichnet man allgemein die Deckfähigkeit eines Anstriches. Oft wird dafür auch der Begriff "Opazität" verwendet. Nach DIN 53778, Teil 3 ist das Kontrastverhältnis das Hundertfache eines Helligkeitsverhältnisses und wird in Prozenten angegeben.

5. Sheen:

Als Sheen bezeichnet man den Glanzgrad wenig glänzender Oberflächen, der nur sichtbar ist, wenn die Oberfläche sehr flach, also unter sehr großem Winkel zur Flächennormale, betrachtet wird.

Die Messung des Sheen erfolgt nach DIN 67530 (DIN 67530 (Januar 1982): Reflektometer zur Glanzbeurteilung an ebenen Anstrich- und Kunststoffoberflächen) mit dem 3-Winkel-Reflektometer "Color-gloss" der Firma Byk, Deutschland bei einem Einfallswinkel von 85° zur Flächennormale. Das Meßgerät ist dem Durchschnittsfachmann bekannt.

### 6. Naßabriebfestigkeit:

Die Naßabriebfestigkeit eines Anstriches ist ein Maß für seine Beständigkeit gegen scheuernde Beanspruchung.

Geprüft wurde sie mit einem Scheuerprüfgerät und nach der Vorschrift gemäß DIN 53778, Teil 2 (DIN 53778, Teil 2 (August 1983): Kunststoffdispersionsfarben für Innen, Beurteilung der Reinigungsfähigkeit und der Wasch- und Scheuerbeständigkeit von Anstrichen).

### 7. Filmrißbildung:

Als Filmrißbildung wird das Auftreten von Rissen während der Trocknung des Anstrichfilmes bezeichnet. Sie ist abhängig von der aufgebrachten Naßfilmdicke. Für die Beurteilung der Filmrißbildung wurde die Keilprüfung angewendet, welche dem Durchschnittsfachmann bekannt ist.

Dazu wurde die Farbe mit einem Rakel auf eine Metallplatte mit keilförmiger Vertiefung (0 - 3 mm) aufgezogen, beginnend bei der tiefsten Stelle. Die beschichtete Platte wurde daraufhin 48 Stunden bei Normalklima (23 ± 2°C / 50 ± 5 % rel. Luftfeuchte) gelagert. Falls Rißbildung auftritt, beginnt sie bei einer bestimmten Trockenfilmdicke, so daß sich eine Grenzlinie ergibt, bis zu der der Farbfilm rißfrei trocknet. Diese Grenzlinie wurde unter Zuhilfenahme einer Lupe genau ermittelt. Die Keiltiefe bei der Grenzlinie wurde als Maß für die Naßfilmdicke angegeben, die in einem Arbeitsgang aufgetragen werden kann, ohne daß der trockene Anstrich Risse zeigt.

### 8. Viskosität:

In der vorliegenden Arbeit wurden alle Viskositätswerte mit einem Viscotester VT 500 der Firma Haake, Deutschland ermittelt. Bestückt war dieses Gerät mit der Meßeinrichtung MV und dem Meßkörper MV 3. Es handelt sich um ein schergeschwindigkeitskontrolliertes Zylinder-Rotationsviskosimeter mit dem Meßbehälter als Stator und dem Meßkörper als Rotor.

Die Messungen erfolgten bei konstanten Scherraten von D = 10, 40 und 100 $s^{-1}$.

### 9. Ver- und Überstreichbarkeit:

Als Verstreichbarkeit einer Farbe bezeichnet man die Güte des ersten Anstriches (= Grundanstrich). Unter Überstreichbarkeit versteht man nach DIN 53778, Teil 4 (DIN 53778, Teil 4 (August 1983): Kunststoffdispersionsfarben, Prüfung der Überstreichbarkeit nach festgelegter Trocknungszeit) die Eigenschaft, auf einen vorhandenen Anstrich nach festgelegter Trocknungszeit einen oder mehrere weitere gleichartige Anstriche aufbringen zu können, ohne daß sich schädigende Wechselwirkungen zwischen den Anstrichen zeigen.

Die Prüfung erfolgte gemäß DIN 53778, Teil 4. Neben der Grundaussage "überstreichbar / nicht überstreichbar" wurde zusätzlich die Güte der Anstriche visuell beurteilt.

### 10. Lagerstabilität:

Unter Lagerstabilität versteht man das Viskositätsverhalten von Farben über die Zeit.

Eine Woche nach Herstellung der Farben wurde die Viskosität bei einer Scherrate von 10 $s^{-1}$ und 40 $s^{-1}$ geprüft. Dann lagerte man die Farben in einem geschlossenen Gefäß bei 50°C und bestimmte nach weiteren 7, 14 und 28 Tagen nochmals die Viskosität.

Die Änderung der Werte über 28 Tage wurde beurteilt. Je geringer sie ausfällt, desto besser ist die Lagerstabilität der Farbe zu bewerten.

Für alle Calciumcarbonat-Versuchsprodukte wurde Marmor aus Carrara, Italien, verwendet. Die Versuchsprodukte wurden aus dem abgebauten Marmor lediglich durch Zerkleinerung und Klassierung aufbereitet.

Zur Klassierung wurde ein Kanalradsichter (Kanalradsichter 100 MZR der Fa. ALPINE AG) verwendet, der die Abtrennung von Feingut mit einem $d_{97}$-Wert von 2 - 80 µm ermöglichte. Aus dem vorzerkleinerten Aufgabegut ($d_{50}$ = 20 - 25 µm) wurde der Grobanteil herausgesichtet. Als Wertprodukt erhielt man das Feingut mit dem gewünschten $d_{50}$-Wert. Da zwei Aufgabeprodukte verwendet wurden, die sich in der Breite ihres Kornbandes deutlich unterschieden, fiel bei gleichem mittlerem Äquivalentdurchmesser auch Feingut mit unterschiedlich breiten bzw. steilen Korngrößenverteilungen an.

Es wurden umfangreiche Reihenversuche im Rahmen einer Dissertation durchgeführt. Schließlich wurden als optimale Calciumcarbonate elf verschiedene Produkte im Bereich von $d_{50} = 9,6 - 20,5 \, \mu m$ herausgesichtet. Um die Praxis-Anforderung - 60 µm Maximalkorngröße - zu erfüllen, erfolgte anschließend eine Schutzabsiebung bei 56 µm.

Die folgenden Tabellen I und II zeigen die Korngrößenverteilungen dieser elf erfindungsgemäßen Produkte. In den Tabellen sind darüber hinaus die Weißgradwerte zugeordnet.

Tabelle I :

| Eigenschaft | VP 1 | VP 2 | VP 3 | VP 4 | VP 5 | VP 6 |
|---|---|---|---|---|---|---|
| Korngrößenverteilung: | | | | | | |
| < 56 µm [%] | 100 | 100 | 100 | 100 | 100 | 100 |
| < 40 µm [%] | 93 | 98 | 99 | 100 | 100 | 100 |
| < 20 µm [%] | 48 | 63 | 74 | 84 | 89 | 95 |
| < 10 µm [%] | 15 | 20 | 26 | 31 | 39 | 51 |
| < 5 µm [%] | 9 | 11 | 15 | 16 | 22 | 27 |
| < 1 µm [%] | < 3 | 4 | 6 | < 3 | 5 | 3 |
| $d_{50}$ [µm] | 20.5 | 17.4 | 15.5 | 13.6 | 12.2 | 9.9 |
| Weißgrad: | | | | | | |
| Rx [%] 90.9 | 90.9 | 91.9 | 92.7 | 93.1 93.2 | 93.2 | 93.5 |
| Ry [%] | 90.8 | 91.7 | 92.6 | 93.0 | 93.1 | 93.3 |
| Rz [%] | 90.0 | 90.9 | 91.7 | 92.1 | 92.2 | 92.5 |
| Gelbwert [%] | 1.1 | 1.1 | 1.1 | 1.1 | 1.1 | 1.1 |
| (a) Mattierungsmittel mit steiler Korngrößenverteilung | | | | | | |

Tabelle II:

| Eigenschaft | VP 7 | VP 8 | VP 9 | VP 10 | VP 11 |
|---|---|---|---|---|---|
| Korngrößenverteilung: | | | | | |
| < 56 µm [%] | 100 | 100 | 100 | 100 | 100 |
| < 40 µm [%] | 90 | 95 | 98 | 99 | 99 |
| < 20 µm [%] | 55 | 63 | 70 | 77 | 87 |
| < 10 µm [%] | 31 | 35 | 39 | 44 | 52 |
| < 5 µm [%] | 18 | 20 | 22 | 24 | 28 |
| < 1 µm[%] | < 3 | 3 | 3 | 3 | 4 |
| $d_{50}$ [µm] | 17.8 | 15.3 | 13.5 | 11.7 | 9.6 |
| Weißgrad: | | | | | |
| Rx [%] | 92.6 | 93.3 | 93.3 | 93.4 | 93.4 |
| Ry [%] | 92.4 | 93.0 | 93.0 | 93.2 | 93.2 |
| Rz [%] | 91.4 | 92.0 | 92.0 | 92.1 | 92.3 |
| Gelbwert[%] | 1.4 | 1.5 | 1.4 | 1.4 | 1.3 |
| (b) Mattierungsmittel mit flacher Komgrößenverteilung | | | | | |

Die Korngrößenverteilungen der Versuchsprodukte wurden gleichmäßig abgestuft und Paare mit nahezu identischem mittleren Äquivalentdurchmesser und flacher bzw. steiler Kurve gebildet. Die Helligkeitswerte aller elf erfindungsgemäßen Produkte erfüllen das Kriterium - Ry > 90% -, und mit über 92 % liegen acht der elf sogar weit über der Mindestanforderung.

Herstellung und Applikation der Farben:

Die Farben wurden in zwei Schritten hergestellt: Vorbereitung des Stammansatzes und Fertigstellung der eigentlichen Farben.

Zuerst wird der Stammansatz angerührt, welcher sich aus Wasser und den Additiven zusammensetzt. Diese Additive sind alle Additive gemäß dem Stand der Technik und im Handel ohne weiteres erhältlich. Für den Stammansatz wurden folgende Additive verwendet: Zwei verschiedene Dispergiermittel, ein Konservierungsmittel, ein Entschäumer, zwei verschiedene Verdicker und ein pH-Regler. Die Stammansatzmenge ist so bemessen, daß sie für alle Farben einer Versuchsserie ausreicht. Es wurde ein großer Ansatz gewählt, da man diese Mischung zumindest über Nacht stehenlassen soll, bevor die weiteren Bestandteile eingearbeitet werden, damit eingeschlossene Luft entweichen kann. Darüber hinaus wird dadurch sichergestellt, daß alle Farben exakt die gleiche Mischung an Additiven und Wasser enthalten.

Beim Mischen des Stammansatzes werden mit dem Labordissolver (3.8 m/s Umfangsgeschwindigkeit der Rührschreibe) ins Wasser nacheinander die beiden Verdicker, der pH-Regler, die beiden Dispergiermittel, das Konservierungsmittel und der Entschäumer eingearbeitet. Die komplette Mischung wird nach 3 - 5 Minuten gerührt und daraufhin zum Entlüften für mindestens 15 Stunden verschlossen aufbewahrt.

Nach der Entlüftungsphase entnimmt man dem Stammansatz die pro Versuchsfarbe notwendige Teilmenge. Mit dem Dissolver werden bei langsamer Rotordrehzahl die Füllstoffe nacheinander - vom feinsten bis zum gröbsten - eingebracht und diese Mischung mit 9.4 m/s Umfangsgeschwindigkeit 10 Minuten lang dispergiert. Danach senkt man die Geschwindigkeit wieder auf 3.8 m/s und fügt als letzten Bestandteil das Bindemittel zu, das man 5 Minuten einrührt.

Die fertige Farbe muß vor der Applikation noch mindestens 15 Stunden lang ruhen.

Die Applikation der Farbe erfolgte in folgender Weise:

Zur Prüfung der optischen Anstrichkennzahlen wurde die Farbe mit einem Rakel bei 150 µm Spalthöhe auf Kontrastkarten aufgezogen. Als Rakel bezeichnet man eine breite Klinge mit definiertem Abstand zum Untergrund (= Spalthöhe). Kontrastkarten sind Kartonkarten mit teils weißer, teils schwarzer Beschichtung.

Vor der Messung wurden die Anstriche 48 Stunden im Normalklima (23 ± 2°C / 50 ± 5 % rel. Luftfeuchte) gelagert.

Zur Prüfung der Naßabriebfestigkeit wurde die Farbe mit einem Rakel auf schwarze Lenetta-Folien (oberflächlich aufgerauhte PVC-Folien) aufgezogen. Nach 28-tägiger Lagerung im Normalklima mußten sich gleichmäßig dicke Anstrichfilme mit einer Schichtdicke von 100 ± 5 µm gebildet haben.

Im ersten Versuchsabschnitt soll der Zusammenhang von Korngrößenverteilung der $CaCO_3$-Mattierungsmittel-Versuchsprodukte und Mattierungswirkung bei konstantem Mattierungsmittelgehalt untersucht werden.

Es wird, bezogen auf die gesamte Farbe, ein Mattierungsmittelgehalt von 10 % gewählt. Dieser hohe Wert wird deutlich zeigen, ob ein Produkt zu grob ist, denn das Mattierungsmittel prägt entscheidend die Rauhigkeit der Anstrichoberfläche. Sie. ist einerseits wichtig für niedrigen Sheen, andererseits können aber, gerade durch sehr grobe Mattierungsmittel, übermäßig stark strukturierte Oberflächen entstehen. In Folge zeigt sich bei solchen Anstrichen eine unerwünscht hohe Verschmutzungsneigung.

Folgende Farben-Basisrezeptur ohne Mattierungsmittel wurde für alle Versuche eingesetzt:

Tabelle 3:

| Basis-Prüfrezeptur ohne Mattierungsmittel | | |
|---|---|---|
| Bestandteil | Gewichtsanteil, % | Volumsanteil, vol.-% |
| Bindemittel (Copolymerisat: Vinylacetat, Ethen) | 11.0 | 16.4 |
| Weißpigment (Rutil: $TiO_2$, $d_{50} = 0.3$ µm) | 6.0 | 2.3 |
| Füllstoff I (Marmor-Pulver, $d_{50} = 0.9$ µm) | 12.5 | 7.3 |
| Füllstoff II (Marmor-Pulver, $d_{50} = 2.8$ µm) | 31.9 | 18.6 |
| Füllstoff III (Talkum-Pulver, $d_{50} = 9.4$ µm) | 5.0 | 2.9 |
| Dispergiermittel (Na-Salz einer Polyacrylsäure) | 0.3 | 0.4 |
| Dispergiermittel (Na-Polyphosphat) | 1.3 | 1.9 |
| Konservierungsmittel (Chloracetamidbasis) | 0.2 | 0.3 |

EP 0 682 093 B1

Tabelle 3: (fortgesetzt)

| Basis-Prüfrezeptur ohne Mattierungsmittel | | |
|---|---|---|
| Bestandteil | Gewichtsanteil, % | Volumsanteil, vol.-% |
| Entschäumer (Weißölbasis) | 0.2 | 0.4 |
| Verdicker (Polyurethan) | 4.6 | 7.3 |
| Verdicker (Methyl-Hydroxyethyl-Cellulose) | 0.3 | 0.4 |
| pH-Regler (NaOH) | 0.2 | 0.3 |
| Wasser deionisiert | 26.5 | 41.5 |
| Summe | 100.0 | 100.0 |

In dieser ersten Prüfserie wird neben den elf Farben mit Mattierungsmittel-Versuchsprodukten auch noch die Ausgangsfarbe ohne Mattierungsmittel als Nullprobe mitgeprüft.

Die zwölf Farben wurden auf Kontrastkarten aufgezogen, um die wesentlichsten Abstricheigenschaften - Sheen, Helligkeit und Kontrastverhältnis - zu bestimmen. In Tabelle 4 sind die Meßergebnisse zusammengestellt, wobei zusätzlich die Schichtdicke des trockenen Anstriches (= Trockenfilmdicke) angegeben ist.

Tabelle 4:

| Sheen-Werte der mattierten Anstriche gegenüber der unmattierten Basis | | |
|---|---|---|
| Farben-Nummer | Mattierungsmittel | Sheen % |
| Basis | ohne Matt.m. | 11.1 |
| 1 | VP 1 | 2.2 |
| 2 | VP 2 | 2.5 |
| 3 | VP 3 | 2.8 |
| 4 | VP 4 | 3.3 |
| 5 | VP 5 | 3.6 |
| 6 | VP 6 | 4.6 |
| 7 | VP 7 | 2.6 |
| 8 | VP 8 | 2.9 |
| 9 | VP 9 | 3.2 |
| 10 | VP 10 | 3.6 |
| 11 | VP 11 | 4.2 |

Alle elf $CaCO_3$-Mattierungsmittel-Versuchsprodukte bewirken bei einem Anteil an der Gesamtfarbe von 10 Gew.% eine deutliche Senkung des Glanzgrades, wodurch man Farben erhält, die matte Anstriche-mit überraschend niedrigem Sheen ergeben. In der Wirkung von Mattierungsmitteln mit steiler bzw. flacher Korngrößenverteilung besteht kein signifikanter Unterschied.

Anwendungsbeispiel:

In oben beschriebener Weise wurde ein Calciumcarbonat-Mattierungsmittel hergestellt und im Vergleich zu Mattierungsmitteln gemäß dem Stand der Technik in einer Innendispersionsfarbe bei einem angestrebten Sheen von etwa 4 % geprüft. (Die dafür erforderlichen Mattierungsmittelmengen wurden in einer weiteren Studie bestimmt.)

| 1. Mattierungsmittel (entspricht dem Stand der Technik) | Siliciumoxid-Produkt ($d_{50}$ = 16 µm) |
|---|---|
| 2. Mattierungsmittel | Cellulose-Produkt (mittlere Faserlänge: 30 µm, mittlere Faserdicke: 17 µm) |

9

(fortgesetzt)

| | |
|---|---|
| (entspricht dem Stand der Technik) | |
| 3. Mattierungsmittel | Calciumcarbonat-Produkt ($d_{50}$ = 15,5 µm) |
| (entspricht der Erfindung) | |

Alle drei Mattierungsmittel wurden in der Basis-Farbenrezeptur gemäß Tabelle 3 geprüft. Abweichend zu der dort angegebenen Zusammensetzung wurden folgende Füllstoff- und Mattierungsmittelmengen eingesetzt:

- Für das 1. Mattierungsmittel

| | |
|---|---|
| Füllstoff I | 10,7 Gew.% |
| Füllstoff II | 30,1 Gew.% |
| Mattierungsmittel | 3,7 Gew.% |

- Für das 2. Mattierungsmittel

| | |
|---|---|
| Füllstoff I | 9,9 Gew.% |
| Füllstoff II | 29,3 Gew.% |
| Mattierungsmittel | 5,3 Gew.% |

- Für das 3. Mattierungsmittel

| | |
|---|---|
| Füllstoff I | 9,0 Gew.% |
| Füllstoff II | 28,4 Gew.% |
| Mattierungsmittel | 7,1 Gew.% |

Farbenherstellung und Applikation erfolgten nach den oben beschriebenen Methoden.

| Prüfresultate: | | | | |
|---|---|---|---|---|
| Eigenschaften | | Mattierungsmittel- Nr. | | |
| | | 1 | 2 | 3 |
| Optisch | Sheen, % | 4.2 | 4.0 | 4.4 |
| | Helligkeit (Ry), % | 89.6 | 89.7 | 89.2 |
| | Gelbwert, % | 2.1 | 2.3 | 2.1 |
| | Kontrastverhältnis, % | 97.0 | 97.0 | 96.0 |
| Trockenfilmdicke, µm | | 58 | 61 | 50 |
| Mechanisch | Naßabriebfestigkeit, Scheuerzyklenzahl | > 1900 | > 1900 | > 1900 |
| | Rißbildung (3 mm Keil), mm | 0.8 | 0.9 | 1.0 |
| Verarbeitbarkeit | Viskosität, mPas | | | |
| | bei D = 10 s$^{-1}$ | 5040 | 12100 | 4590 |
| | bei D = 40 s$^{-1}$ | 2920 | n. b. | 2600 |
| | Verstreichbarkeit | mäßig | schlecht | gut |
| | Überstreichbarkeit | mäßig | schlecht | gut |
| | Lagerstabilität | mäßig | mäßig | gut |

Die Meßergebnisse zeigen für das erfindungsgemäße Mattierungsmittel überraschend gute Eigenschaften. Bei gleich guter Mattierung (nahezu identische Sheen-Werte) stellen sich überraschend deutlich bessere Verarbeitungseigenschaften als bei den Mattierungsmitteln nach dem Stand der Technik ein. Die Viskosität liegt bei jeder Scherrate tiefer, die Applikation der Farbe wird somit erleichtert. Ver- und Überstreichbarkeit sind besser, wodurch sich schon nach dem ersten Farbauftrag, aber auch bei mehrmaligem Überstreichen gleichmäßigere und ungestörtere Anstriche ausbilden. Durch das erfindungsgemäße Mattierungsmittel wird weiterhin eine verbesserte Lagerstabilität erzielt. Neben den günstigeren Verarbeitungseigenschaften stellt sich durch das erfindungsgemäße Mattierungsmittel gegenüber Produkten nach dem Stand der Technik auch ein verbessertes Trocknungsverhalten der Farbe ein, ausgewiesen dadurch, daß dickere Naß-Farbfilme rißfrei trocknen.

Die Erfindung weist insbesondere folgende Vorteile auf:

- verbesserte Ver- und Überstreichbarkeit der Farbe
- verbesserte Viskosität der Farbe
- verbesserte Lagerstabilität der Farbe
- verringerte Neigung zur Rißbildung bei der Farbtrocknung
- Erhöhung der Wirtschaftlichkeit durch Senkung der Materialkosten
- Austausch von ökologisch bedenklichen Produkten durch das in Herstellung, Anwendung und seiner Produkteigenart völlig unbedenkliche erfindungsgemäße Mattierungsmittel.

**Patentansprüche**

1. Verwendung von carbonathaltigen mineralischen Füllstoffen, insbesondere natürlichen und/oder gefällten Calciumcarbonaten mit folgender Korngrößenverteilung:

| | |
|---|---|
| < 61 µm | 100 % |
| < 56 µm | 95 - 100 % |
| < 40 µm | 90 - 100 % |
| < 20 µm | 48 - 95 % |
| < 10 µm | 15 - 52 % |
| < 5 µm | 9 - 28 % |
| < 1 µm | 0 - 10 % |
| $d_{50}$ : | 9,6 - 20,5 µm, |

wobei zur Ermittlung der Korngrößenverteilung der Sedigraph 5100 verwendet wird, als Mattierungsmittel, insbesondere für wäßrige Anstrichsysteme oder für Kunststoffdispersionen.

2. Verwendung von carbonathaltigen mineralischen Füllstoffen, insbesondere natürlichen und/oder gefällten Calciumcarbonaten nach Anspruch 1, mit folgender Korngrößenverteilung:

| | | | |
|---|---|---|---|
| < 56 µm | 100 % | | |
| < 40 µm | 90 - 100 %, | insbesondere | 95 - 99 % |
| < 20 µm | 55 - 84 %, | insbesondere | 63 - 74 % |
| < 10 µm | 20 - 44 %, | insbesondere | 26 - 35 % |
| < 5 µm | 11 - 24 %, | insbesondere | 15 - 20 % |
| < 1 µm | 0 - 6 %, | insbesondere | 3 - 6 % |
| $d_{50}$ | 11,7 - 17,8 µm, | insbesondere | 15,3 bis 15,5 um |

als Mattierungsmittel, insbesondere für wäßrige Anstrichsysteme oder für Kunststoffdispersionen.

3. Verwendung nach Anspruch 1 oder 2,
dadurch gekennzeichnet,
daß Calciumcarbonat, insbesondere ein natürliches Calciumcarbonat, vorzugsweise Marmor, verwendet wird.

**Claims**

1. Use of carbonate containing mineral fillers, more particularly natural and/or precipitated calcium carbonates having the following grain size distribution:

| < 61 μm | 100 % |
|---|---|
| < 56 μm | 95 - 100 % |
| < 40 μm | 90 - 100 % |
| < 20 μm | 48 - 95 % |
| < 10 μm | 15 - 52 % |
| < 5 μm | 9 - 28 % |
| < 1 μm | 0 - 10 % |
| $d_{50}$ | 9,6 - 20,5 μm |

using a Sedigraph 5100 for the determination of the grain size distribution, as matting agents, more particularly for aqueous use paint systems or for plastic dispersions.

2. Use of carbonate containing mineral fillers, more particularly natural and/or precipitated calcium carbonates according to claim 1, having the following grain size distribution:

| < 56 μm | 100 % | | |
|---|---|---|---|
| < 40 μm | 90 - 100 %, | more particularly | 95 - 99 %, |
| < 20 μm | 55 - 84 %, | more particularly | 63 - 74 %, |
| < 10 μm | 20 - 44 %, | more particularly | 26 - 35 %, |
| < 5 μm | 11 - 24 %, | more particularly | 15 - 20 %, |
| < 1 μm | 0 - 6 %, | more particularly | 3 - 6 %, |
| $d_{50}$ | 11,7 - 17,8 μm, | more particularly | 15,3 to 15,5 μm |

as of matting agents, more particularly for aqueous paint systems or for plastic dispersions.

3. Use according to claims 1 or 2,
   **characterized** in that calcium carbonate, more particularly a natural calcium carbonate, preferably marble is employed therein.

**Revendications**

1. Utilisation de charges minérales carbonatées, en particulier de carbonates de calcium naturels et/ou précipités ayant la distribution granulométrique suivante :

| < 61 μm | 100 % |
|---|---|
| < 56 μm | 95 - 100 % |
| < 40 μm | 90 - 100 % |
| < 20 μm | 48 - 95 % |
| < 10 μm | 15 - 52 % |
| < 5 μm | 9 - 28 % |
| < 1 μm | 0 - 10 % |
| $d_{50}$ | 9,6 - 20,5 μm, |

en utilisant pour la détermination de la distribution granulométrique le Sedigraph 5100, en tant qu'agent de matité, en particulier pour des systèmes d'enduits aqueux ou pour des dispersions de matières plastiques.

2. Utilisation de charges minérales carbonatées, en particulier de carbonates de calcium naturels et/ou précipités selon la revendication 1, ayant la distribution granulométrique suivante :

| < 56 μm | 100 % | | |
|---|---|---|---|
| < 40 μm | 90 - 100 %, | en particulier | 95 - 99 % |

EP 0 682 093 B1

(suite)

| < 20 μm | 55 - 84 %, | en particulier | 63 - 74 % |
|---|---|---|---|
| < 10 μm | 20 - 44 %, | en particulier | 26 - 35 % |
| < 5 μm | 11 - 24 %, | en particulier | 15 - 20 % |
| < 1 μm | 0 - 6 %, | en particulier | 3 - 6 % |
| $d_{50}$ | 11,7 - 17,8 μm, | en particulier | 15,3 à 15,5 μm |

en tant qu'agent de matité, en particulier pour des systèmes d'enduits aqueux ou pour des dispersions de matières plastiques.

3. Utilisation selon la revendication 1 ou 2, caractérisée en ce que l'on utilise du carbonate de calcium, en particulier un carbonate de calcium naturel, de préférence du marbre.